# EUROPEAN PATENT SPECIFICATION

(11) **EP 1 113 200 B1**
(45) Date of publication and mention of the grant of the patent: **07.06.2006**
(21) Application number: 00128212.8
(22) Date of filing: 22.12.2000
(51) Int. Cl.: F16J 15/08

(54) **Sealing mechanism for internal combustion engine**
Dichtungsvorrichtung für eine Brennkraftmaschine
Dispositif d'étanchéité pour moteur à combustion interne

(30) Priority: 27.12.1999 JP 36907299
(43) Date of publication of application: 04.07.2001
(73) Proprietor: ISHIKAWA GASKET CO. LTD., Tokyo (JP)
(72) Inventor: Udagawa, Tsunekazu, Ichikawa-shi (JP)
(74) Representative: Banzer, Hans-Jörg

(56) References cited:
- EP-A- 0 866 244
- DE-A1- 3 023 782
- US-A- 4 917 062
- US-A- 5 275 139
- US-A- 5 410 997
- US-A- 5 517 958
- US-A- 5 671 930

## Description

### Background of the Invention and Related Art Statement

The present invention relates to a sealing mechanism with a gasket between a cylinder head and a cylinder block for an internal combustion engine. Such a gasket is known from document US-A-5 275 139. In particular, the invention is directed to the sealing mechanism for effectively sealing between the cylinder head and the cylinder block by adjusting sealing pressures around the cylinder bore and liquid hole while changing the combination of beads formed on the gasket and sealing grooves formed on the engine.

Conventionally, in case a cylinder head and a cylinder block for an internal combustion engine are sealed, a cylinder head gasket is installed between the cylinder head and the cylinder block to thereby seal combustion gas, liquid and so on.

The cylinder head gasket is formed according to the shape of the engine parts, such as cylinder block and cylinder head. Also, the cylinder head gasket includes bolt holes and liquid holes, such as water holes and oil holes, and various sealing means are formed around the holes for sealing.

In the gasket, even if the sealing means are formed in the same gasket, the required sealing abilities or characteristics are different according to the holes to be sealed. Namely, in the sealing means for the cylinder bore, the sealing means must seal high pressure and high temperature gas in the cylinder bore. On the other hand, in the liquid hole, the temperature in the liquid hole is relatively low, but sealing for liquid, not gas, is required.

Also, it has been required to reduce the weight and the manufacturing cost for the engine, so that the cylinder head gasket has been changed to be formed of one or two metal plates from a type formed of a large number of metal plates. Also, since the engine has been changed to be small and to provide high power, the distance between the cylinder bores is likely to be made narrower.

Therefore, it is difficult to use and combine beads, grommets and shims as the sealing means, as in the lamination type formed of a large number of metal plates, and also, the area to be able to use for sealing is reduced. Therefore, it is required to use simple and effective sealing means.

Also, in order to reduce the weight of the engine, the engine is made of aluminum, which is low in rigidity and is likely to be damaged, as compared with the conventional iron cast engine. Also, the required sealing pressure is increased due to high power of the engine. Therefore, the sealing means without elasticity, such as simple folding of a metal plate or grommet, can not be used for the aluminum engine because of forming damage to the engine.

In view of the above, a sealing system formed of a cylinder head, cylinder block and gasket was proposed in U.S. Patent No. 5,221,097, wherein beads of the gasket are disposed in grooves formed in the cylinder head and the cylinder block. The gasket as disclosed in the U.S. patent operates properly as intended, but there is some room to improve the sealing system.

Therefore, an object of the invention is to provide a sealing mechanism for sealing between a cylinder head and a cylinder block by a metal gasket, which can properly seal around a cylinder bore and a liquid hole by properly setting sealing lines and sealing pressures.

Another object of the invention is to provide a sealing mechanism as stated above, which is excellent in sealing ability and durability.

Further objects and advantages of the invention will be apparent from the following description of the invention.

### Summary of the Invention

A sealing mechanism for an internal combustion engine of the invention comprises a cylinder head having a liquid hole, a cylinder block having a cylinder bore and a liquid hole, a first sealing groove formed at least in one of the cylinder head and the cylinder block around the cylinder bore, a second sealing groove formed at least in one of the cylinder head and the cylinder block around the liquid hole, and a metal gasket situated between the cylinder head and the cylinder block to seal therebetween and having a first bead located in the first groove and a second bead located in the second groove.

In the invention, the shapes or sizes of the first and second beads and the shapes or sizes of the first and second grooves are adjusted to form a first sealing pressure formed between the first bead and the first groove to be different from a second sealing pressure formed between the second bead and the second groove.

In the invention, the shapes or sizes of the first and second beads are the same, and the shapes or sizes of the first and second grooves are different to form the first sealing pressure to be greater than the second sealing pressure.

In the invention, the shapes or sizes of the first and second grooves are the same, and the shapes or sizes of the first and second beads are different to form the first sealing pressure to be greater than the second sealing pressure.

Actually, the first groove may have a depth shallower than that of the second groove, and the first bead may have a height higher than that of the second bead.

In the sealing mechanism, when the gasket is compressed between the cylinder head and the cylinder block, the gasket provides first sealing lines formed by compression between the first bead and the first groove, and second sealing lines formed by compression between the second bead and the second groove. The number of the first sealing lines is greater than that of the second sealing lines by changing the shapes of the first and second beads or changing the shapes of the first and second grooves.

In the above structure, in order to seal the two different holes, such as cylinder bore and water hole, which require different sealing abilities, the shapes or sizes of the beads or the shapes or sizes of the sealing grooves are adjusted or changed to change the contact or abutting areas between the beads and the sealing grooves. The sealing pressure or sealing lines may be relatively easily changed by changing the abutting areas.

Namely, the sealing lines for high sealing pressure are required for sealing high pressure and high temperature combustion gas around the cylinder bore. Also, the number of the sealing lines must be increased. However, in order to seal the cooling water or circulating oil around the liquid holes, the pressure at the sealing lines may be relatively low. Also, the number of the sealing lines may be reduced.

In order to seal portions with different sealing requirements, for example, one of the beads may be made high, or one of the sealing grooves may be made shallow to increase the sealing pressure. In regard to the number of the sealing lines, the number of the sealing lines may be changed by changing the shape of the bead, for example trapezoid and semicircular arc, or changing the shape of the sealing groove, for example trapezoid and rectangular, wherein the number of the sealing lines in the former example is greater than that in the later example, respectively.

Accordingly, it is possible to relatively easily provide the necessary sealing pressures and the number of the sealing lines for the holes to be sealed. Thus, the suitable sealing abilities can be provided for the cylinder bores and the liquid holes, such as water holes and oil holes, which require different sealing pressures and sealing lines.

In the structure as explained above, it is especially useful in case the gasket is formed of one metal plate, but in case the gasket is formed of a plurality of metal plates, the structure is effective as well. The shapes or sizes of the beads and the sealing grooves may be selected according to the sealing ability of the engine.

### Brief Description of the Drawings

Fig. 1 shows a sealing mechanism of the invention with different shapes of beads and sealing grooves, wherein (a) is an exploded sectional view, and (b) is a sectional view;
Fig. 2 shows a sealing mechanism of the invention with same shapes of the beads and different shapes of the sealing grooves, wherein (a) is an exploded sectional view, and (b) is a sectional view;
Fig. 3 shows a sealing mechanism of the invention with different shapes of the beads and same shapes of the sealing grooves, wherein (a) is an exploded sectional view, and (b) is a sectional view;
Fig. 4 shows the shapes of the sealing grooves of the invention in section, wherein (a) to (i) are rectangle, triangle, polygon, trapezoid, semicircle, circular arc, ellipse, dorm, and rectangle with center projection;
Fig. 5 shows the shapes of the beads of the invention in section, wherein (a) to (f) are semicircle, circular arc, ellipse, triangle, trapezoid and wave shapes;
Fig. 6 shows explanatory sectional views for showing abutting conditions of the bead and sealing groove, wherein (a) is a semicircular bead and a rectangular sealing groove, (b) is a semicircular bead and a trapezoidal sealing groove, (c) is a semicircular bead and a triangular sealing groove, and (d) is a trapezoidal bead and a semicircular sealing groove; and
Fig. 7 shows explanatory sectional views for showing abutting conditions of the bead and sealing groove, wherein tightening pressure is increased from (a) to (e).

### Detailed Description of Preferred Embodiments

The sealing mechanisms of the invention will be explained with reference to the accompanying drawings.

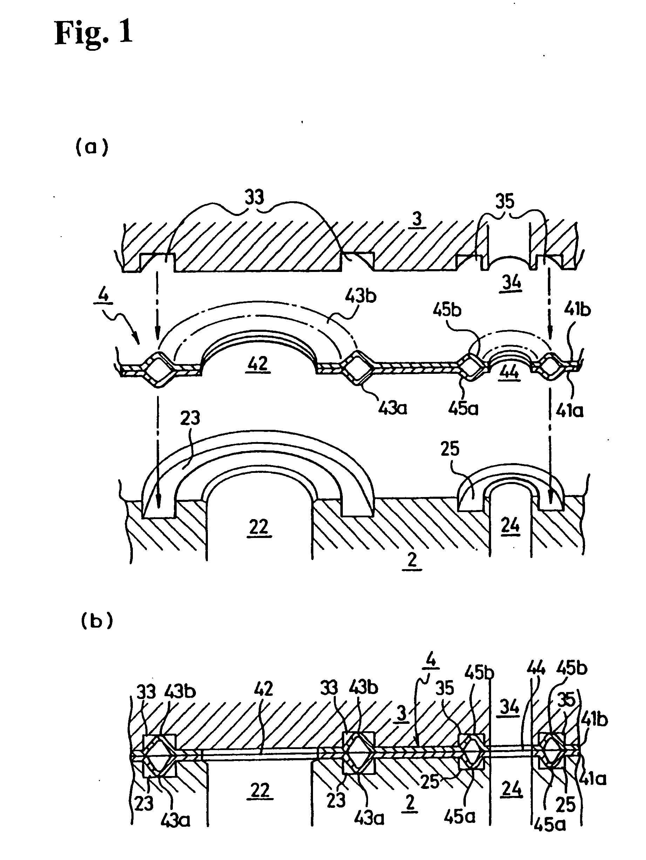

As shown in Figs. 1-3, in the sealing mechanism of the invention, a metal gasket 4 is sandwiched between a cylinder head 2 and a cylinder block or cylinder body 3 of an engine to seal high temperature and high pressure combustion gas in a cylinder bore 22, and liquid, such as cooling water and oil, in liquid paths 24, 34.

Incidentally, Figs. 1-7 are explanatory diagrams, wherein the thickness of the metal plate, the sizes of the beads and the sealing grooves and the ratio thereof are different from those in the actual gasket and emphasized to easily understand the invention.

In the sealing mechanism of the engine of the invention, as shown in Fig. 1, annular first beads 43a, 43b for holes 42 for the cylinder bore are formed around the holes 42 in the metal plates 41a, 41b of the metal gasket 4. Also, second beads 45a, 45b for liquid are formed around liquid holes 44, such as water hole and oil hole, located outside the first beads 43a, 43b for the cylinder bore.

Also, the cylinder head 2 and the cylinder block 3 for sandwiching the gasket 4 include first sealing grooves 23, 33 and second sealing grooves 25, 35 for respectively receiving the first beads 43a, 43b and the second beads 45a, 45b when assembled together.

Further, since the surface pressure distributions necessary for sealing the hole 22 for the cylinder bore and the surface pressure distributions necessary for sealing the liquid paths 24, 34 are different, in order to obtain the appropriate surface pressure distributions in compliance therewith, the first beads 43a, 43b, the second beads 45a, 45b, the first sealing grooves 23, 33 and the second sealing grooves 25, 35 are combined, as stated below.

In the first combination, as shown in Fig. 1, the shapes or sizes of the first and second sealing grooves, and the shapes or sizes of the first and second beads are both changed.

In this structure, the sealing pressure or surface pressure formed between the first bead and the first sealing groove becomes different from that of the sealing pressure or surface pressure formed between the second bead and the second sealing groove. In case the bead and the sealing groove are changed, the surface pressures can be adjusted precisely.

Namely, around the cylinder bore 22, in order to seal high pressure and high temperature combustion gas, the seal lines for high pressure are formed, while the number of the seal lines is increased. On the other hand, around the liquid path 24, in order to seal cooling water or circulating oil, the seal lines for relatively low pressure are formed, while the number of the seal lines is reduced.

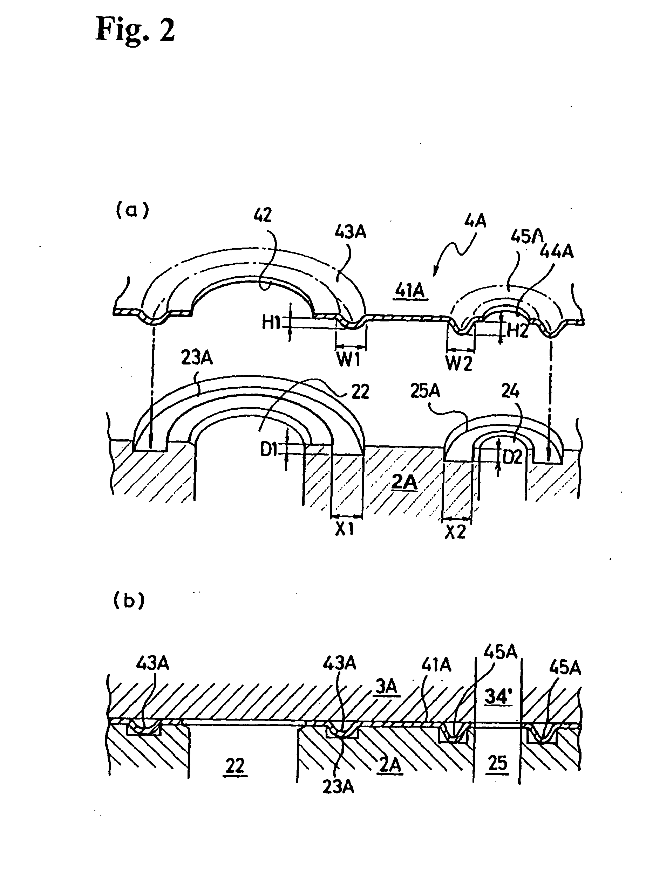

In the second combination, as shown in Fig. 2, the shapes and sizes of the first and second beads are the same, and the shapes or sizes of the first and second sealing grooves are formed differently.

In the metal gasket 4A formed of one metal plate 41A, as shown in Fig. 2, a first bead 43A and a second bead 45A have semicircular shapes, wherein the widths W1, W2 and the heights H1, H2 are the same. In regard to the first sealing groove 23A and the second sealing groove 25A, the widths X1, X2 are the same, but the depth D1 is shallower than the depth D2.

In this structure, the surface pressure formed between the first bead 43A and the first sealing groove 23A is made higher than that formed between the second bead 45A and the second sealing groove 25A.

In case of Fig. 2, since the beads 43A, 45A have the same shapes and sizes, a press for the metal gasket 4A can be formed easily. The difference of the sealing pressures is adjusted by the shapes or sizes of the sealing grooves 23A, 25A at the side of the engine 2.

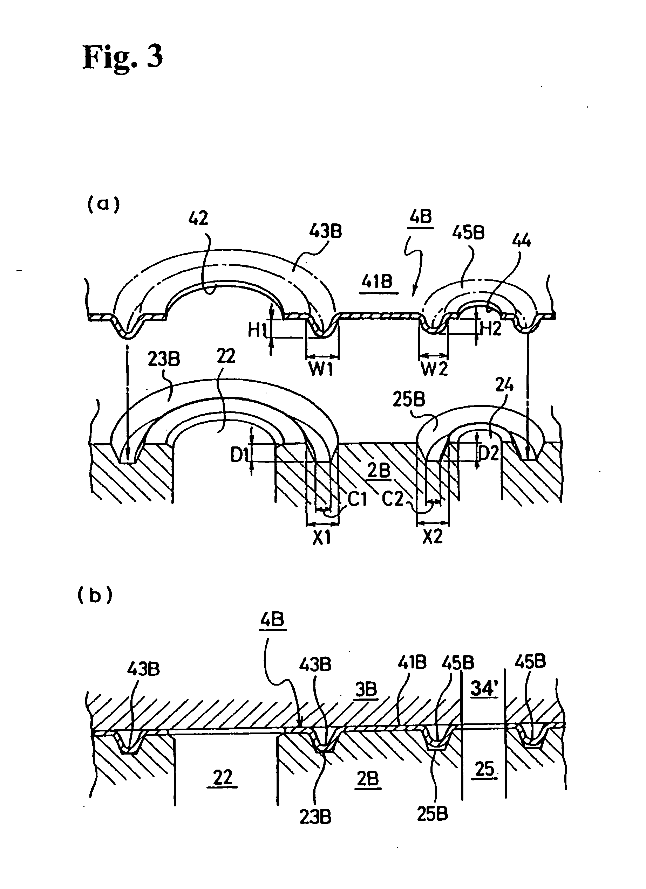

In a third combination, as shown in Fig. 3, the shapes and sizes of the first and second sealing grooves are the same, and the shapes or sizes of the first and second beads are formed differently.

In the metal gasket 4B formed of one metal plate 41B, the first bead 43B and the second bead 45B have semicircular shapes, wherein the width W1 and the height H1 of the first bead 43B are formed to become greater than the width W2 and the height H2 of the second bead 45B. The shapes and sizes of the first sealing groove 23B and the second sealing groove 25B are the same, i.e. X1=X2, C1=C2 and D1=D2.

In this structure, the surface pressure formed between the first bead 43B and the first sealing groove 23B is greater than that between the second bead 45B and the second sealing groove 25B.

In case of Fig. 3, since the shapes and sizes of the sealing grooves 23B, 25B at the side of the engine part 2 are the same, the engine part 2 can be manufactured easily. The difference of the sealing pressures is adjusted by the shapes or sizes of the beads 43B, 45B of the metal gasket 4B.

In the sealing mechanisms as explained above, the abutting portions of the beads 43A, 45A (43B, 45B) and the sealing grooves 23A, 25A (23B, 25B) are changed by changing the shapes, sizes and characteristics of the beads 43B, 45B or the shapes, sizes and characteristics of the sealing grooves 23A, 25A. The sealing pressure or contacting pressure in association with the changes of the abutting portions is adjusted, so that it is possible to relatively easily form or provide the sealing pressures and the number of sealing lines necessary for the respective hole 22 and path 24.

Therefore, it is possible to provide the sealing abilities to seal the hole 22 for the cylinder bore and the liquid path 24 for water hole or oil hole, which require different sealing pressures for sealing. The good sealing can be provided for the engine with low rigidity.

Next, the relations between the beads and the sealing grooves will be explained in detail.

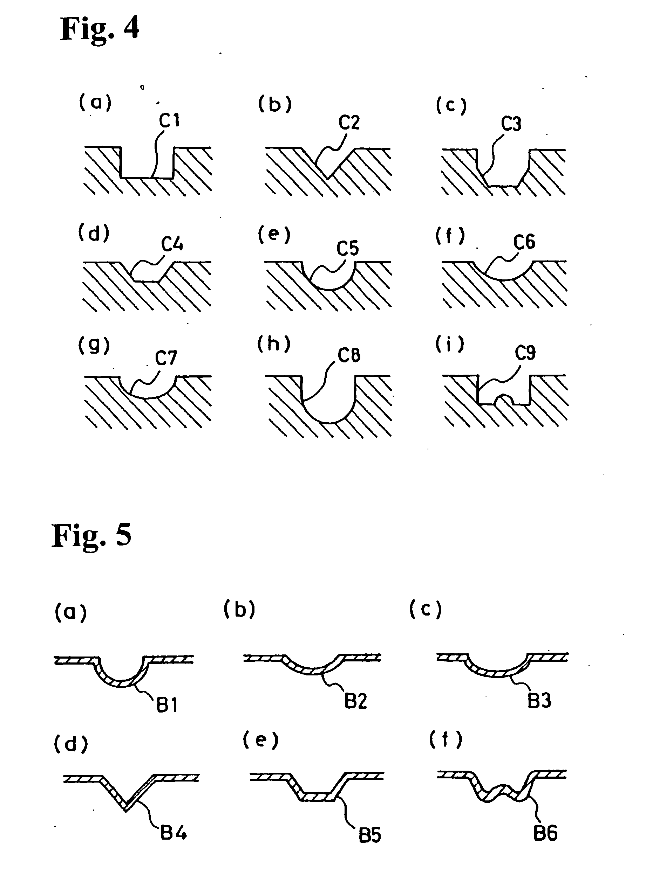

The sealing groves 23a, 33b, 25a, 35b may have various shapes as shown in Fig. 4, such as rectangle C1, triangle C2, polygon C3, trapezoid C4, semicircle C5, circular arc C6, ellipse C7, dorm C8, and rectangle with center projection C9.

Also, in regard to the shapes of the first beads 43a, 43b and the second beads 45a, 45b, various shapes as shown in Fig. 5, such as semicircle B1, circular arc B2, ellipse B3, triangle B4, trapezoid B5, and wave shapes B6 may be employed.

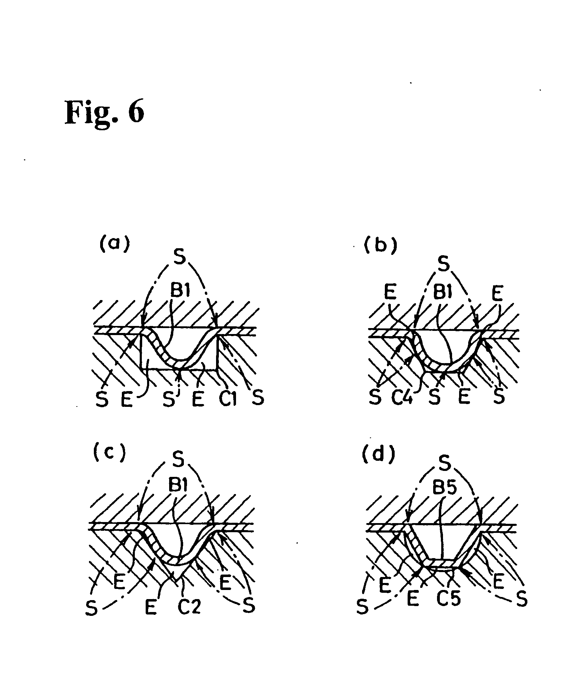

The abutting conditions of the beads B1, B5 and the sealing grooves C1, C2, C3, C4, C5 are shown in Fig. 6. According to the combination of the beads and the sealing grooves, the number of the sealing lines formed by the abutting portions S is increased. Also, spaces E, each being surrounded by the wall of the sealing groove and the projecting portion of the bead and located adjacent to the abutting portion, i.e. sealing line S, is formed.

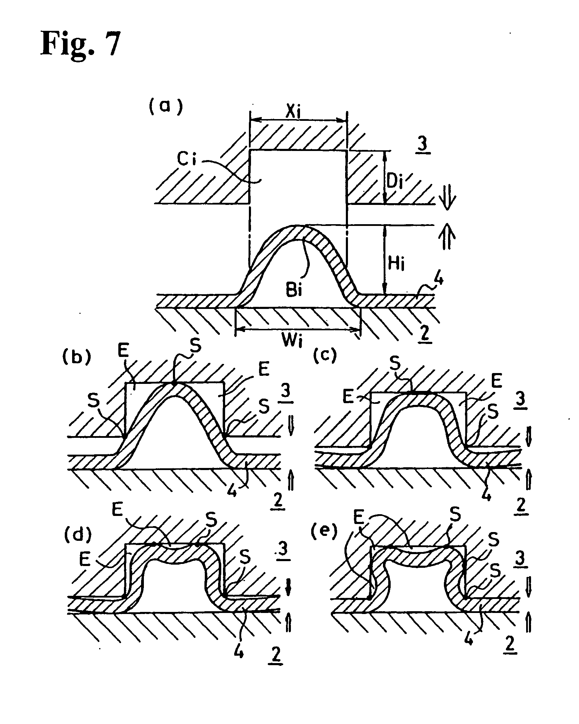

Also, as an example, in Fig. 7, the deformation of the bead Bi, e.g. B1, in the sealing groove Ci, e.g. C1, by applying a pressure to the bead is shown in diagram. In Fig. 7, (a) shows the condition before assembly, and the pressure gradually increases from (b) to (e). As the pressure increases, the bead Bi deforms, and the number of the seal lines S and the spaces E adjacent thereto increases, so that it becomes the tight sealing means.

The advantages of the combination of the bead and the sealing groove are shown below.

On the contact or joining surfaces of the cylinder head 2 and the cylinder block 3 at the engine side, the first and second sealing grooves 23, 33, 25, 35 for receiving the first and second beads 43a, 43b, 45a, 45b formed in the metal gasket 4 are formed, and the multiple seal lines are formed by the contact and pressure between the beads 43a, 43b, 45a, 45b and the sealing grooves 23, 33, 25, 35. Due to the multiple seal lines, the leakage of the combustion gas and the liquid, such as cooling water and oil, which are the subject for sealing, can be prevented.

Even if the seal lines are degraded and the fluid to be sealed leaks, the fluid is lead to the tortuous path formed by combining the spaces E between the side walls of the sealing grooves 23, 33, 25, 35 and the beads 43a, 43b, 45a, 45b. Thus, the fluid is lead to a labyrinth to provide a sealing effect, so that a large amount of fluid is prevented from leaking.

Further, the contacting or abutting areas increase due to formation of the multiple seal lines, and the bead contacts the inner wall of the sealing groove. Thus, the deformation amount of the bead decreases, so that creep relaxation of the bead is prevented.

Also, the surface pressures applied to the engine parts 2, 3 are spread by the formation of the multiple seal lines. Thus, a large surface pressure is not formed or concentrated on the engine, so that the damages likely to be formed on the aluminum engine parts 2, 3 can be prevented.

As explained above, in the sealing mechanism of the invention, the shapes and sizes of the beads or the shapes or sizes of the sealing grooves are changed according to the holes for the cylinder bore and liquid hole, so that it is possible to adjust the number of the seal lines and the surface pressures at the seal lines. Thus, it is possible to easily form the sealing pressures and the number of the seal lines required for the holes to be sealed, and the required sealing can be made.

## Claims

1. A sealing mechanism for an internal combustion engine, comprising:
a cylinder head (3, 3A, 3B) having a liquid hole (34, 34'),
a cylinder block (2, 2A, 2B) having a cylinder bore (22) and a liquid hole (24, 25),
a first groove (23, 33, 23A, 23B) formed at least in one of the cylinder head and the cylinder block around the cylinder bore (22),
a second groove (25, 25A, 25B, 35) formed at least in one of the cylinder head and the cylinder block around the liquid hole, and
a metal gasket (4, 4A, 4B) situated between the cylinder head and the cylinder block to seal therebetween and having a first bead (43a, 43b, 43A, 43B) located in the first groove and a second bead (45a, 45b, 45A, 45B) located in the second groove,
said sealing mechanism being **characterized in that** the shapes of the first and second beads (43a, 43b, 43A, 43B; 45a, 45b, 45A, 45B) and the shapes of the first and second grooves (23, 33, 23A, 23B; 25, 25A, 25B, 35) are selected to form a first sealing pressure formed between the first bead and the first groove to be different from a second sealing pressure formed between the second bead and the second groove.

2. A sealing mechanism according to claim 1, wherein said shapes of the first and second beads (43A, 45A) are the same, and the shapes of the first and second grooves (23A, 25A) are different to form the first sealing pressure to be greater than the second sealing pressure.

3. A sealing mechanism according to claim 2, wherein said first groove (23A) has a depth shallower than that of the second groove (25A).

4. A sealing mechanism according to claim 1, wherein said shapes of the first and second grooves (23B, 25B) are the same, and the shapes of the first and second beads (43B, 45B) are different to form the first sealing pressure to be greater than the second sealing pressure.

5. A sealing mechanism according to claim 4, wherein said first bead (43B) has a height higher than that of the second bead (45B).

6. A sealing mechanism according to any one of claims 1-5, wherein said gasket has first sealing lines (S) formed by compression between the first bead and the first groove, and second sealing lines (S) formed by compression between the second bead and the second groove, said first sealing lines being greater in number than the second sealing lines by changing the shapes of the first and second beads or changing the shapes of the first and second grooves.

7. A sealing mechanism according to any one of claims 1-6, wherein said first and second grooves are formed on both the cylinder head (3) and cylinder block (2) to face each other, respectively, and the gasket (4) is formed of first and second metal plates (41a, 41b) laminated with each other, each having the first and second beads around the cylinder bore and liquid hole.

## Patentansprüche

1. Dichtungsmechanismus für einen Verbrennungsmotor, umfassend:
einen Zylinderkopf (3, 3A, 3B) mit einem Flüssigkeitsloch (34, 34'),
einen Zylinderblock (2, 2A, 2B) mit einer Zylinderbohrung (22) und einem Flüssigkeitsloch (24, 25),
eine erste Vertiefung (23, 33, 23A, 23B), welche zumindest entweder in dem Zylinderkopf oder dem Zylinderblock um die Zylinderbohrung (22) herum ausgebildet ist,
eine zweite Vertiefung (25, 25A, 25B, 35), welche zumindest entweder in dem Zylinderkopf oder dem Zylinderblock um das Flüssigkeitsloch herum ausgebildet ist, und
eine Metalldichtung (4, 4A, 4B), welche zwischen dem Zylinderkopf und dem Zylinderblock angeordnet ist, um dort dazwischen abzudichten, und eine erste Sicke (43a, 43b, 43A, 43B), welche in der ersten Vertiefung angeordnet ist, und eine zweite Sicke (45a, 45b, 45A, 45B), welche in der zweiten Vertiefung angeordnet ist, aufweist,
wobei der Dichtungsmechanismus **dadurch gekennzeichnet ist, dass** die Formen der ersten und der zweiten Sicke (43a, 43b, 43A, 43B; 45a, 45b, 45A, 45B) und die Formen der ersten und der zweiten Vertiefung (23, 33, 23A, 23B; 25, 25A, 25B, 35) derart ausgewählt sind, dass sie einen ersten Dichtungsdruck, welcher zwischen der ersten Sicke und der ersten Vertiefung ausgebildet ist, derart ausbilden, dass er verschieden von einem zweiten Dichtungsdruck, welcher zwischen der zweiten Sicke und der zweiten Vertiefung ausgebildet ist, ist.

2. Dichtungsmechanismus nach Anspruch 1, wobei die Formen der ersten und der zweiten Sicke (43A, 45A) dieselben sind und die Formen der ersten und der zweiten Vertiefung (23A, 25A) unterschiedlich sind, damit der erste Dichtungsdruck größer als der zweite Dichtungsdruck ausgebildet ist.

3. Dichtungsmechanismus nach Anspruch 2, wobei die erste Vertiefung (23A) eine Tiefe aufweist, welche flacher als diejenige der zweiten Vertiefung (25A) ist.

4. Dichtungsmechanismus nach Anspruch 1, wobei die Formen der ersten und der zweiten Vertiefung (23B, 25B) dieselben sind und die Formen der ersten und der zweiten Sicke (43B, 45B) unterschiedlich sind, damit der erste Dichtungsdruck größer als der zweite Dichtungsdruck ausgebildet ist.

5. Dichtungsmechanismus nach Anspruch 4, wobei die erste Sicke (43B) eine Höhe aufweist, welche höher als diejenige der zweiten Sicke (45B) ist.

6. Dichtungsmechanismus nach einem der Ansprüche 1-5, wobei die Dichtung aufweist erste Dichtungslinien (S), welche durch Kompression zwischen der ersten Sicke und der ersten Vertiefung ausgebildet sind, und zweite Dichtungslinien (S), welche durch Kompression zwischen der zweiten Sicke und der zweiten Vertiefung ausgebildet sind, wobei die ersten Dichtungslinien eine größere Anzahl als die zweiten Dichtungslinien aufweisen, indem die Formen der ersten und der zweiten Sicke oder die Formen der ersten und der zweiten Vertiefung verändert sind.

7. Dichtungsmechanismus nach einem der Ansprüche 1-6, wobei die erste und die zweite Vertiefung derart sowohl auf dem Zylinderkopf (3) als auch auf dem Zylinderblock (2) ausgebildet sind, dass sie einander gegenüberliegen, und dass die Dichtung (4) aus einer ersten und einer zweiten Metallplatte (41a, 41b) ausgebildet ist, welche miteinander laminiert sind, wobei jede die erste und die zweite Sicke um die Zylinderbohrung und das Flüssigkeitsloch herum aufweist.

## Revendications

1. Mécanisme d'étanchéité pour un moteur à combustion interne, comprenant :
une culasse (3, 3A, 3B) ayant un trou de passage de liquide (34, 34'),
un bloc-cylindre (2, 2A, 2B) ayant un alésage de cylindre (22) et un trou de passage de liquide (24, 25),
une première gorge (23, 33, 23A, 23B) formée au moins dans l'un de la culasse et du bloc-cylindre, autour de l'alésage de cylindre (22),
une deuxième gorge (25, 25A, 25B, 35) formée au moins dans l'un de la culasse et du bloc-cylindre, autour du trou de passage de liquide, et
un joint d'étanchéité métallique (4, 4A, 4B) situé entre la culasse et le bloc-cylindre pour former une étanchéité entre eux, et ayant un premier bourrelet (43a, 43b, 43A, 43B) situé dans la première gorge et un deuxième bourrelet (45a, 45b, 45A, 45B) situé dans la deuxième gorge,
ledit mécanisme d'étanchéité étant **caractérisé en ce que** les formes des premier et deuxième bourrelets (43a, 43b, 43A, 43B ; 45a, 45b, 45A, 45B) et les formes des première et deuxième gorges (23, 33, 23A, 23B ; 25, 25A, 25B, 35) sont choisies de manière à former une première pression d'étanchéité entre le premier bourrelet et la première gorge, différente d'une deuxième pression d'étanchéité formée entre le deuxième bourrelet et la deuxième gorge.

2. Mécanisme d'étanchéité selon la revendication 1, dans lequel lesdites formes des premier et deuxième bourrelets (43A, 45A) sont identiques et les formes des première et deuxième gorges (23A, 25A) sont différentes, afin de former la première pression d'étanchéité de façon qu'elle soit supérieure à la deuxième pression d'étanchéité.

3. Mécanisme d'étanchéité selon la revendication 2, dans lequel ladite première gorge (23A) est plus profonde que la deuxième gorge (25A).

4. Mécanisme d'étanchéité selon la revendication 1, dans lequel lesdites formes des première et deuxième gorges (23B, 25B) sont identiques, et les formes des premier et deuxième bourrelets (43B, 45B) sont différentes, afin de former la première pression d'étanchéité de façon qu'elle soit supérieure à la deuxième pression d'étanchéité.

5. Mécanisme d'étanchéité selon la revendication 4, dans lequel ledit premier bourrelet (43B) a une hauteur supérieure à celle du deuxième bourrelet (45B).

6. Mécanisme d'étanchéité selon l'une quelconque des revendications 1 à 5, dans lequel ledit joint d'étanchéité a des premières lignes d'étanchéité (S) formées par compression entre le premier bourrelet et la première gorge, et des deuxièmes lignes d'étanchéité (S) formées par compression entre le deuxième bourrelet et la deuxième gorge, lesdites premières lignes d'étanchéité étant plus nombreuses que les deuxièmes lignes d'étanchéité, en raison du changement de formes des premier et deuxième bourrelets ou du changement de formes des première et deuxième gorges.

7. Mécanisme d'étanchéité selon l'une quelconque des revendications 1 à 6, dans lequel lesdites première et deuxième gorges sont respectivement formées sur la culasse (3) et sur le bloc-cylindre (2) de façon à se trouver en regard l'une de l'autre, et le joint d'étanchéité (4) est constitué d'une première et d'une deuxième plaques de métal (41a, 41b) stratifiées l'une à l'autre, ayant chacune les premier et deuxième bourrelets formés autour de l'alésage de cylindre et du trou de passage de liquide.
